# EUROPÄISCHE PATENTANMELDUNG

(11) **EP 3 123 851 A1**
(43) Veröffentlichungstag der Anmeldung: **01.02.2017**
(21) Anmeldenummer: 16157680.6
(22) Anmeldetag: 26.02.2016
(51) Int. Cl.: A01C 1/04, A01C 1/06, A01G 9/10, A01G 1/00

(54) **SAATGUTVERBUNDSTOFF UND VERFAHREN ZU DESSEN AUFTRAG AUF OBERFLÄCHEN**

(30) Priorität: 31.07.2015 DE 202015005402 U
(71) Anmelder: D'Agnone Beratungs- und Beteiligungs UG, 53773 Hennef (DE)
(72) Erfinder: D'Agnone, Uwe, 53773 Hennef (DE)
(74) Vertreter: Wittmann, Ernst-Ulrich

(57) **Zusammenfassung**

Die vorliegende Erfindung betrifft einen Saatgutverbundstoff bestehend aus einer Vielzahl von Saatgut und einem natürlichen Leim. Der Leim weist im flüssigen Zustand neben Wasser wenigstens Dextrine als Bestandteil auf, und der Leim umschließt das Saatgut mit einem Film im getrockneten Zustand vollständig.

## Beschreibung

Die vorliegende Erfindung betrifft einen Saatgutverbundstoff, sowie ein Verfahren zum Erzeugen einer mit Saatgut beschichteten Oberfläche mit einem Saatgutverbundstoff. Der erfindungsgemäße Saatgutverbundstoff und das Verfahren gemäß der vorliegende Erfindung können im Bereich der Landwirtschaft und des Gartenbaus im Freiland oder im Haus bzw. der Wohnung eingesetzt werden.

Nach der Ernte befinden sich die Samen von Pflanzen in einer sogenannten Keimruhe, die zum Teil erst nach mehreren Wochen enzymatisch abgebaut wird. Dadurch sorgt die Natur für die saisongerechte Keimfähigkeit des Saatguts. Die Zeitdauer der Keimruhe ist bei den einzelnen Pflanzenarten sehr unterschiedlich, ebenso wie die Faktoren, die zum Abbau der Keimruhe führen. Als Einflussfaktoren sind zu nennen: Feuchtigkeit, Temperaturschwankungen, Lichtverhältnisse und Nährmedium (Boden). Bei trockener und kühler Lagerung behält Saatgut über viele Jahre die Keim- und Triebkraft.

Die Herstellungvon ummantelterSaat, sogenannte Mantelsaat, beispielweise im landwirtschaftlichen und/oder gärtnerischen Bereich hat den Zweckje nach Art und Eigenschaften der Inhaltsstoffe des Mantels das Saatgut zu schützen und/oder zu verbessern. Vorteile der Mantelsaat liegen u.a. in der größeren Widerstandsfähigkeit gegen Austrocknung und Winderosion, gegen Insekten- und Vogelfraß und andere Saatgut-Verluste. Insbesondere bietet der Mantel eine direkte Versorgung des Keimlings der Mantelsaat mit Nährstoffen nach Auflösen des Mantels durch vorherigen Kontakt der Mantelsaat mit Wasser oder Feuchtigkeit im Pflanzsubstrat.

Im Stand der Technik sind Verfahren bekannt, um das Saatgut als Einzelsaat mit den Inhaltsstoffen des Mantels zu umhüllen, der einerseits das Saatgut gegen physikalische Beanspruchungen vor der Aussaat schützt, aber dergestalt ist, dass er sich in Kontakt mit Flüssigkeiten bzw. im feuchten Pflanzsubstrat auflöst und den Keimling in der Anfangsphase des Keimens schnell und sicher mit den essentiellen Nährstoffen versorgt.

Bislang hat es sich jedoch als schwierig erwiesen, Mantelsaat so zu präparieren, dass eine Vielzahl von Saatgut gemeinsam in einem Verbundstoffvollständig ummantelt wird, die vorzugsweise einen oder mehrere der beschriebenen Vorteile der Ummantelung von Einzelsaat bietet.

In den im Stand derTechnik bekannten Saatgutverbundstoffen ist es unter anderem von Nachteil, dass diese im Falle einer Vielzahl von Saatgut dieses nicht als Einheit vollständig umhüllen, so dass bspw. die Widerstandsfähigkeit des Saatguts gegenüber einer schädlichen Exposition mit Luft, insbesondere mit Wind und/oder mit Licht nicht ausgeschlossen oder verringert werden kann, welche die Keimungsfähigkeit des Saatguts, bspw. durch eine vermehre Evaporation des Saatguteigenwassers negativ beeinflussen können.

Aufgabe der vorliegenden Erfindung ist es, die im Stand derTechnik bekannten Nachteile wenigstens teilweise zu überwinden. Die vorstehende Aufgabe wird durch einen erfindungsgemäßen Saatgutverbundstoff gemäß Anspruch 1 gelöst. Bevorzugte Ausgestaltungsformen des Saatgutverbundstoffs sind Gegenstand der entsprechenden Unteransprüche. Insbesondere soll der erfindungsgemäße Leim des Saatgutverbundstoffs nach Herstellung ganz oder teilweise aushärten und in Kontakt mit Feuchtigkeit oder Nässe (z.B. Wasser oder wässrige Lösungen) sich ganz bzw. größtenteils auflösen oder zumindest stark aufweichen und das Saatgut keimen lassen.

Der erfindungsgemäße Saatgutgutverbundstoff besteht aus einer Vielzahl von Saatgut und einem natürlichen Leim. Der erfindungsgemäße Verbundstoff ist dadurch gekennzeichnet, dass der Leim im flüssigen Zustand neben Wasserwenigstens Dextrine als Bestandteil aufweist, und der Leim das Saatgut mit einem Film im getrockneten Zustand vollständig umschließt.

Im Sinne der Erfindung ist das Saatgut in mehreren Schichten regelmäßig oder unregelmäßig übereinander in dem Leim des Saatgutverbundstoffs angeordnet oder ist alternativ in einer einzigen Schicht regelmäßig oder unregelmäßig angeordnet.

Unter Verbundstoff (engl. Compound) im Sinne der vorliegenden Erfindung werden alle Arten von Gemischen aus sortenreinen Grundstoffen bezeichnet, denen zusätzliche Füllstoffe, Verstärkungsstoffe oder andere Additive beigemischt worden sind. Eine Lösung der einzelnen Grundstoffe untereinander findet dabei nicht statt. Durch die Compoundierung werden somit mindestens zwei Stoffe miteinanderzu einer homogenen Mischung verbunden. Ziel der Compoundierung ist es, die Eigenschaften der Grundstoffe auf einen Anwendungsfall hin zu modifizieren. Als besondere Herausforderung gilt es, eine über die Zeit mögliche Entmischung des Verbundstoffs zu vermeiden.

Unter Saatgut (auch Saatkorn oder Saatfrucht) im Sinne der vorliegende Erfindung werden trockene, ruhende, generative Fortpflanzungsorgane wie Samen, Früchte, Scheinfrüchte, Fruchtstände oder Teile davon, verstanden. Sie enthalten die vollständige, durch Befruchtung entstandene Keimanlage der Pflanzen.

Unter Dextrinen (auch Stärkegummi oder Maltodextrine) im Sinne der vorliegenden Erfindung wird ein Kohlenhydratgemisch wechselnder Zusammensetzung verstanden, das durch Einwirkung von Fermenten, Hitze oder Säuren auf Stärke entsteht, also aus Stärkeabbauprodukten besteht.

Gemäß einer bevorzugten Ausführungsform der vorliegenden Erfindung weist der Leim neben Dextrinen, weitere Hilfsstoffe, wie beispielsweise Alkali insbesondere Natriumhydroxid, Kaliumhydroxid und/oder Säure wie beispielsweise Essigsäure, Ameisensäure und/oder Alkohol wie beispielsweise Ethanol und/oder Konservierungsstoffe, Schädlingsbekämpfungsmittel, Keimungsinhibitoren, Dünger, Glutin, Kasein und Kombinationen hieraus auf.

UnterSchädlingsbekämpfungsmittel im Sinne der vorliegenden Erfindung werden Mittel verstanden, die den Befall des Saatgutverbundstoffs bzw. des Saatguts mit Mikroorganismen wie Pilzen und Bakterien oder anderen Schadorganismen, wie Insekten und/oder Nagetieren (wie Ratten und Mäuse) verhindert bzw. verzögert.

Alternativ kann das von dem Saatgutverbundstoff umhüllte Saatgut durch Imprägnierung mit Schädlingsbekämpfungsmittel versehen werden.

Gemäß einer weiteren bevorzugten Ausführungsform des erfindungsgemäßen Saatgutverbundstoffs ist der Leim wasserlöslich.

Dies ermöglicht, dass sich der Leim des erfindungsgemäßen Saatgutverbundstoffs unter Feuchtigkeitseinfluss, wie beispielsweise in feuchtem Pflanzsubstrat oder bei Nässe (z.B. bei Kontakt mit Wasser oder wässrigen Lösungen) ganz bzw. größtenteils auflöst und das Saatgut freigibt, oder der Leim zumindest stark aufweicht, so dass es keimen kann.

Gemäß einer weiteren bevorzugten Ausführungsform des erfindungsgemäßen Saatgutverbundstoffs kann eine Vielzahl von verschiedenen Saatgut eingesetzt werden, welches aus einer Gruppe von Saatgut ausgewählt wird, welche Blumensamen, Gräsersamen, Kräutersamen, Gemüsesamen, Strauchsamen und/oder Baumsamen aufweist.

Unter solche Saatgut im Sinne der Erfindung fallen zum Beispiel Weizen, Gerste, Hafer, Triticale, Roggen, Amarant, Quinoa, Buchweizen, Hirse, Mais, Anis, Basilikum, Petersilie (kraus und glatt), Rosmarin, Bohnenkraut, Currykraut, Salbei, Lavendel, Minze, Zitronenmelisse, Bohnenkraut, Liebstöckel, Dill, Schnittlauch, Bärlauch, Poree, Oregano, Estragon, Kerbel, Knollen- und Stangensellerie, Pastinaken, Chili, Stevia, Bohne, Erbse, Feldsalat, Fenchel, Knoblauch, Kohl (wie bspw. Weißkohl, Rotkohl, Wirsing, Rosenkohl, Blumenkohl, Romanesco, Spitzkohl, Butterkohl, Kohlrabi, Broccoli, Grünkohl, Chinakohl, Pak Choi und Raps), Koriander, Kümmel, Lauch, Möhre, Paprika, Pfeffer, Rettich, Radieschen, Mangold, Kresse, Salat (wie bspw. Feldsalat, Endiviensalat, Chicoree, Radicchio, Rucola, Frieseesalat, Römersalat, Lollo rosso, Lollo bionda, Eisbergsalat, Kopfsalat, Eichblattsalat), Sojabohne, Mungobohne, Spargel, Spinat, Tomate, Wilde Rauke, Zwiebel, Mohn, Sonnenblume, Wiesenrispe, Zinnie, Anika, Stiefmütterchen, Veilchen, Butterblume, Gänseblume, Bellis, Vergiessmeinnicht, Wicke, Rittersporn, Kiefernsamen, Tannensamen, Eukalyptussamen, Erlensamen, Klee und dergleichen.

Gemäß einerweiteren bevorzugten Ausführungsform des erfindungsgemäßen Saatgutverbundstoffs stellt der Leim Nährstoffe für das Pflanzenwachstum bereit, insbesondere Stickstoff-, Phosphat-, Kalium-, Magnesium-, Calcium- und/oder Schwefelverbindungen.

Gemäß einerweiteren bevorzugten Ausführungsform schließt der Film des Leims die Saatgut im Wesentlichen luftdicht und/oder lichtdicht ab.

Hierdurch erhält das Saatgut eine erhöhte Widerstandsfähigkeit gegen eine schädliche Exposition mit Luft, insbesondere mit Wind und/oder mit Licht, welche die Keimungsfähigkeit des Saatguts, bspw. durch eine vermehre Evaporation des Saatguteigenwassers negativ beeinflussen können.

Stoffe, welche die UV-Beständigkeit des Saatgutverbundstoffs verbessern, kann der Leim zusätzlich aufweisen oder diese können ebenfalls analog zu den Schädlingsbekämpfungsmitteln durch Imprägnierung des von dem Saatgutverbundstoff umhüllten Saatgut aufgebracht werden.

Gemäß einer weiteren bevorzugten Ausführungsform des Saatgutverbundstoffs ist der Leim angefärbt und insbesondere für die Färbung wasserlösliche bzw. wasserverdünnbare Farbstoffe verwendet werden.

Die Anfärbung kann aus ästhetischen Gründen erfolgen und sämtliche möglichen Farben und Farbnuancen, sowie Mischungen hieraus beinhalten, wie weiß, grau, schwarz, braun, rot, violett, gelb, grün, blau, wobei verschiedene Farbmuster aus den vorgenannten eingeschlossen sind. Andererseits oder zusätzlich kann die Anfärbung zum Schutz des Saatguts vor UV-Strahlung dienen.

Alternativ liegt es auch im Sinn der vorliegenden Erfindung den Leim entsprechend der Keimeigenschaften des verwendeten Saatguts entsprechend lichtdurchlässig, insbesondere transparent zu gestalten, um auch die Keimung von lichtkeimenden Saatgut zu ermöglichen.

Die vorliegende Erfindung umfasst ferner auch das Verfahren zum Erzeugen einer mit Saatgut beschichteten Oberfläche mit einem erfindungsgemäßen Saatgutverbundstoff mit den Schritten:
- Bereitstellen des flüssigen Leims;
- Vermischen des Leims mit dem Saatgut im Gewichtsverhältnis 100:1, bevorzugt 10:1 und besonders bevorzugt 1:1;
- Aufbringen des Saatgutverbundstoffs auf die Oberfläche und Trocknen des Leims.

Gemäß einer bevorzugten Ausführungsform des erfindungsgemäßen Verfahrens erfolgt die Trocknung des Leims bei Umgebungstemperatur.

Gemäß einer weiteren bevorzugten Ausführungsform des erfindungsgemäßen Verfahrens weist der Leim eine Viskosität zwischen 1000 mPa*s und 20 000 mPa*s und insbesondere eine Viskosität von 100 000 mPa*s bis 15 000 mPa*s bzw. 13 500 mPa*s auf.

Nach einer weiteren bevorzugten Ausführungsform des erfindungsgemäßen Verfahrens ist die Trocknungszeit des Leims kleiner 24 Stunden, insbesondere kleiner 12 Stunden.

In einer weiteren bevorzugten Ausführungsform des erfindungsgemäßen Verfahrens wird der Leim bei einerTemperaturzwischen 15 °C und 60 °C, vorzugsweise zwischen 20 °C und 45 °C und insbesondere zwischen 25 °C und 40 °C getrocknet.

Gemäß einer bevorzugten Ausführungsform des erfindungsgemäßen Verfahrens liegt der Trockengehalt der Saatgut vor dem Vermischen mit dem Leim zwischen 5 % und 15 %, vorzugsweise zwischen 6 % und 12 % und insbesondere zwischen 7 % und 10 %.

Gemäß einer bevorzugten Ausführungsform des erfindungsgemäßen Verfahrens wird der Saatgutverbundstoff in einer vorgegeben Form auf die Oberfläche aufgetragen. Eine erfindungsgemäße Form weist bspw. einen oder mehrere Punkte, Kreise, Streifen, Sterne, Herzen, Smileys oder Kombinationen hiervon auf, sowie andere geometrische und/oderfigürliche Ornamente, oderweist Ornamente in Form von Namens- und Schriftzügen, wie Slogans und Sätze alleine oder in Kombination mit den eingangs beschriebenen geometrischen und/oderfigürlichen Ornamenten auf.

Gegenstand der vorliegenden Erfindung ist weiterhin die Verwendung des erfindungsgemäßen Saatgutverbundstoffs für die Beschichtung einer Oberfläche oder zur Herstellung eines Pflanzköpers, wie aus Kokosfasern oder ähnliche Fasern, Erde, Torf, insbesondere in gepresster Form, Holz, Papier oder Pappe, Kork und/oder Kunststoff oder einer Mischung aus wenigstens zwei dervorgenannten.

Die mittels des erfindungsgemäßen Verfahrens hergestellten mit erfindungsgemäßen Saatgutverbundstoff beschichteten Oberflächen bzw. erfindungsgemäß hergestellten Pflanzkörpersind ebenfalls Gegenstand der vorliegenden Erfindung und dienen als Saatgutträger.

Insbesondere vorteilhaft sind Saatgutträger, die biologisch abbaubar und/oder kompostierbar sind.

Weiterhin bevorzugt zeichnet sich ein erfindungsgemäßer Saatgutträger, insbesondere ein erfindungsgemäßer Pflanzkörper dadurch aus, dass er ein aufquellbares Material oder wenigstens eine aufquellbare Schicht mit einer hohen Wasseraufnahmekapazität aufweist. Dadurch wird ein Saatgutträger gebildet, welcher das Saatgut zur Verfügung stellt und gleichsam als gut durchwurzelbares Anzuchtsubstrat für das Saatgut dient.

Eine solche beschichtete Oberfläche oder ein solcher Pflanzköper, welche als Saatgutträger fungieren, sind bspw. flächig oder dreidimensional ausgebildet. Eine flächige Ausgestaltung des Saatgutträgers eignet sich besonders gut für eine professionelle Verwendung im größeren Maßstab. Eine mögliche Ausgestaltungsform des Saatgutträgers ist bspw. die eines Pflanzschildes mit Steg, dessen unteres Ende beim Einpflanzen in ein Pflanzsubstrat gesteckt wird und an dessen oberen Ende eine größere Fläche bspw. in ovaler oder rechteckiger Form anschließt, die als Etikette zum Aufschreiben des Pflanzennamens dient, wobei der Saatgutverbundstoff auf die Oberfläche des Teils des Saatgutträgers angebracht ist, der später in das Pflanzsubstrat gesteckt wird. In einer weiteren mögliche Ausgestaltungsform des Saatgutträgers ist der Saatgutträger als Streifen ausgebildet und an der Oberfläche eines Endes des Saatgutträgers mit Saatgutverbundstoff beschichtet, wobei das beschichtete Ende später in das Pflanzsubstrat gesteckt wird. Es hat sich als besonders zweckmäßig herausgestellt, mehrere solche streifenförmigen Ausgestaltungsformen streichholzstreifenartig zusammenzufügen. Diese können dann nach Bedarf aus den Verbund herausgebrochen und in Pflanzsubstrat eingebracht werden.

Bevorzugt ist der Saatgutverbundstoff fest mit dem Saatgutträger verbunden. Alternativ ist eine zweiteilige Ausgestaltung möglich, bei der in den Saatgutträger ein Saatgutverbundstoff-Einsatz eingesetzt wird, bspw. in Form einer Aussparung, der eine bevorzugte Auflagefläche für den Saatgutverbundstoff bereitstellt.

Alternativ zu dem Aufbringen Saatgutverbundstoff-Ornamenten, wie beschrieben, auf einen flächigen oder dreidimensionalen Saatgutträger, bildet alternativ der Saatgutträger ein einzelnes Ornament der oben genannten Art und Weise in Form einer positiven oder negativen Schablone oder ein regelmäßiges Muster von Ornamenten der oben genannten Art und der erfindungsgemäße Saatverbundstoff wird auf Teile oder die gesamte Fläche des Saatgutträgers aufgetragen. Im Falle eines flächigen Saatgutträgers kann eine oder beide Flächen (Ober- und/oder Unterseite) mit einem erfindungsgemäßen Saatgutverbundstoff in der beschrieben Art und Weise mit derartigen Ornamenten beschichtet sein.

Dabei zeigen:
Fig. 1 eine Seitenansicht auf eine bevorzugte Ausführungsform eines flächigen Saatgutträgers in Form eines Pflanzschilds mit mit Saatgutverbundstoff einseitig beschichteter Oberfläche;
Fig. 2 eine perspektivische Seitenansicht auf eine bevorzugte Ausführungsform eines dreidimensionalen Saatgutträgers (Pflanzkörper) mit mit Saatgutverbundstoff einseitig beschichteter Oberfläche;
Fig. 3 eine perspektivische Draufsicht auf eine bevorzugte Ausführungsform eines flächigen Saatgutträgers (Pflanzkörper) mit mit Saatgutverbundstoff einseitig beschichteter Oberfläche in der Art eines Schriftzugs (Logo);
Fig. 4 eine Draufsicht auf eine bevorzugte Ausführungsform eines flächigen Saatgutträgers in Form von mehreren Einzelstreifen, die in einem streichholzstreifenartigen Verbund angeordnet sind mit mit Saatgutverbundstoff einseitig beschichteter Oberfläche;

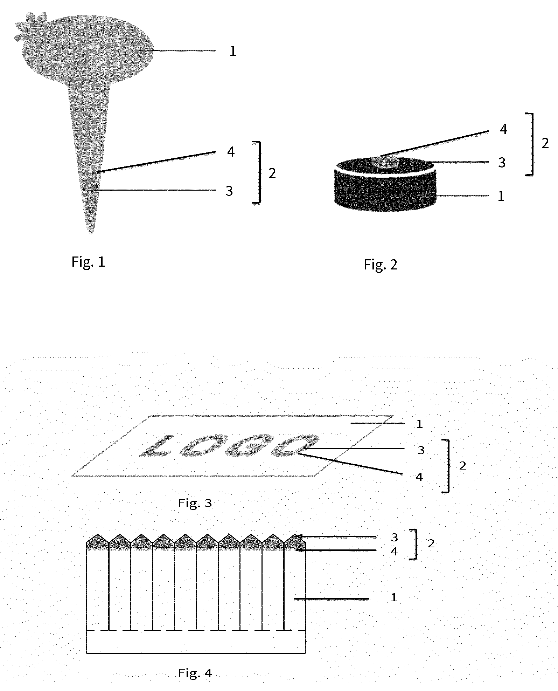

Die Figuren 1 bis 4 zeigen je eine Seitenansicht in Figur 1,je eine perspektivische Seitenansicht in Figur 2, sowie je eine perspektivische Draufsicht in Figur 3 und je eine Draufsicht in Figur4 einer Ausführungsform eines erfindungsgemäßen Saatgutverbundstoffs 2, der in verschiedener Form auf verschiedene Ausführungsformen eines erfindungsgemäßen Saatgutträgers 1 angeordnet ist.

Figur 1 zeigt einen flächigen Saatgutträger 1 in Form eines Pflanzschilds mit kegelförmigen Steg, dessen spitzeres Ende beim Einpflanzen in ein Pflanzsubstrat gesteckt wird und an dessen breiteren Ende eine ovale Fläche anschließt, die als Etikette zum Aufschreiben bspw. des oder der Pflanzennamen bzw. des Trivialnamens der Saatgutmischung des Saatgutverbundstoff 2 dient. Der Saatgutverbundstoff 2 ist flächig kegelförmig, entsprechend der kegelförmigen Form am Ende des Saatgutträgers 1 angepasst, auf der Oberfläche des Saatgutträgers 1 einseitig angeordnet. Eine beidseitige Anordnung ist jedoch auch zweckmäßig. Der Saatgutverbundstoff 2 besteht aus einer Vielzahl von verschieden Saatgut 3 in Form von Saatkörnern/-samen unterschiedlicher Form und Größe sowie einem natürlichen Leim 4. Vorteilhaft besteht der Saatgutträger 1 aus Holz oder Kunststoff oderweist Holz und/oder Kunststoff auf. Insbesondere ist der Saatgutträger 1 aus biologisch abbaubaren und/oder kompostierbaren Material gefertigt. Derwesentliche Vorteil des Saatgutträgers 1 gemäß Fig.1 ist dabei darin zu sehen, dass die Samen, sobald sich der Leim gelöst hat, annährend frei in dem Erdboden liegen. Damit ist es für das Keimen der Samen unerheblich, ob der Saatgutträger 1 direkt nach Einbringen in den Boden verrottet oder erst allmählich im weiteren Prozess des Pflanzenwachstums.

Figur 2 zeigt einen dreidimensionalen Saatgutträger 1 in Form eines Pucks auf dessen oberen kreisförmigen Oberfläche ein Saatgutverbundstoff 2 bestehend aus Saatgut 3 und Leim 4 in der Eingangs bei Figur 1 beschriebenen Art punktförmig in der Mitte der kreisförmigen Oberfläche (konzentrisch) des puckförmigen Saatgutträgers 1 angeordnet ist. Der Saatgutträger 1 fungiert vorliegend als Pflanzkörper und ist insbesondere quellbar, so dass eine hohe Wasseraufnahmekapazität gewährleistet ist. Mit der Saatgutverbundstoff 2 entgegengesetzten Seite (Unterseite) wird der Saatgutträger 1 auf eine Unterlage gestellt, wie beispielsweise in einem Treibhauskasten oder einen Pflanzenuntersetzerodererwird in ein Pflanzsubstrat, bspw. in Erde eingepflanzt. Zum Auskeimen des Saatguts 3 wird der Saatgutträger 1 von oben oder ggf. von unten bewässert, wobei sich der Saatgutträger 1 mit Wasser vollsaugt und aufquillt. Der Leim 4 löst sich unter diesen feuchten/nassen Bedingungen ganz oder größtenteils auf oder wird zumindest stark aufgeweicht, so dass er leicht von den Keimlingen durchdrungen werden kann. Die Keimlinge können die aufgequollenen Saatgutträger 1 leicht durchwurzeln und gut darin Halt finden. Dadurch wird ein Saatgutträger 1 gebildet, welcher das Saatgut 3 zur Verfügung stellt und gleichsam nach Aufquellen als gut durchwurzelbares Anzuchtsubstrat für das Saatgut 3 dient. Alternativ ist eine zweiteilige Ausgestaltung möglich, bei der in den Saatgutträger 1 ein Saatgutverbundstoff-Einsatz eingesetzt wird, bspw. in Form einer Aussparung, dereine bevorzugte Auflagefläche für den Saatgutverbundstoff 2 bereitstellt.

Figur 3 zeigt einen flächigen, dünnwandigen Saatgutträger 1 in der Art eines Papierbogens auf dessen Oberfläche ein Saatgutverbundstoff 2 bestehend aus Saatgut 3 und Leim 4 in der Eingangs bei Figur 1 beschriebenen Art dergestalt angeordnet ist, dass er das Wort "LOGO" in Druckbuchstaben bildet. Der Saatgutträger 1 fungiert vorliegend als Pflanzkörper 1 und ist wiederum insbesondere quellbar und dient gleichsam nach Aufquellen durch Feuchtigkeit als gut durchwurzelbares Anzuchtsubstrat für das Saatgut 3. Das Saatgut 3 kann, wie dargestellt, unregelmäßig verteilt sein, oder aber in regelmäßigem Muster angeordnet sein, z.B. in rechteckiger oder hexagonaler Anordnung. Ein solcher Saatgutträger 1 kann leicht zugeschnitten und auch zur Lagerung oderzum Transport in derArt eines Rollrasens aufgerollt werden und ist daher auch gut für größere Maßstäbe geeignet.

Figur 4 zeigt mehrere flächige Saatgutträger in Form von Einzelstreifen, die in einem streichholzstreifenartigen Verbund angeordnet sind, wobei jeder Einzelstreifen ein Saatgutverbundstoff 2 bestehend aus Saatgut 3 und Leim 4 in der Eingangs bei Figur 1 beschriebenen Art an der Oberfläche seines spitzeren Endes aufweist. Das spitzere, mit Saatgutverbundstoff 2 beschichtete Ende wird später beim Einpflanzen in ein Pflanzsubstrat gesteckt. Der Saatgutverbundstoff 2 ist flächig kegelförmig, entsprechend der kegelförmigen Form am Ende des Saatgutträgers 1 angepasst, auf der Oberfläche des Saatgutträgers 1 einseitig angeordnet. Eine beidseitige Anordnung ist jedoch auch zweckmäßig. Der wesentliche Vorteil des Saatgutträgers 1 gemäß Fig.4 ist dabei zum einen darin zu sehen, dass durch den Verbund in der Art eines Streichholzstreifens eine kompakte Anordnung von Saatgutträgern 1 (als Einzelstreifen) gewährleistet ist. Zum anderen können die einzelne Saatgut 3 tragenden Saatgutträger 1 bedienungsfreundlich einzeln aus dem Verbund gelöst werden und beliebig und gezielt an verschiedenen Stellen eines Pflanzsubstrats wie z.B. dem in einem Blumentopf bequem eingesteckt werden. Dies wiederum ermöglicht, dass die aus dem Saatgut 3 keimenden Pflanzen nach Belieben in dem Pflanzsubstrat flächig verteilt werden können. Auch auf diese Weise lassen sich beispielsweise Muster und Ornamente in der beschriebenen Art manuell herstellen.

## Patentansprüche

1. Saatgutverbundstoff (2) bestehend aus einer Vielzahl von Saatgut (3) und einem natürlichen Leim (4), **dadurch gekennzeichnet, dass**
der Leim (4) im flüssigen Zustand neben Wasser wenigstens Dextrine als Bestandteil aufweist, und der Leim (4) das Saatgut (3) mit einem Film im getrockneten Zustand vollständig umschließt.

2. Saatgutverbundstoff (2) gemäß Anspruch 1, **dadurch gekennzeichnet, dass**
der Leim (4) neben Dextrine, weitere Hilfsstoffe, wie beispielsweise Alkali insbesondere Natriumhydroxid, Kaliumhydroxid und/oder Säure wie beispielsweise Essigsäure, Ameisensäure und/oder Alkohol wie beispielsweise Ethanol und/oder Konservierungsstoffe, Keimungsinhibitoren, Glutin, Kasein und Kombinationen hieraus aufweist.

3. Saatgutverbundstoff (2) gemäß Anspruch 1 oder 2, **dadurch gekennzeichnet, dass**
der Leim (4) wasserlöslich ist.

4. Saatgutverbundstoff (2) gemäß einem der vorstehenden Ansprüche, **dadurch gekennzeichnet, dass**
eine Vielzahl von verschiedenen Saatgut (3) eingesetzt wird, welches aus einer Gruppe von Saatgut (3) ausgewählt wird, welche Blumensamen, Gräsersamen, Kräutersamen, Gemüsesamen, Strauchsamen und/oder Baumsamen aufweist.

5. Saatgutverbundstoff (2) gemäß einem der vorstehenden Ansprüche, **dadurch gekennzeichnet, dass**
der Leim (4) Nährstoffe für das Pflanzenwachstum bereitstellt, insbesondere Stickstoff-, Phosphat-, Kalium-, Magnesium-, Calcium- und/oder Schwefelverbindungen.

6. Saatgutverbundstoff (2) gemäß einem der vorstehenden Ansprüche, **dadurch gekennzeichnet, dass**
der Film des Leims (4) das Saatgut (3) im Wesentlichen luftdicht und/oder lichtdicht abschließt.

7. Saatgutverbundstoff (2) gemäß einem der vorstehenden Ansprüche, **dadurch gekennzeichnet, dass**
der Leim (4) angefärbt ist und insbesondere für die Färbung wasserlösliche bzw. wasserverdünnbare Farbstoffe verwendet werden.

8. Verfahren zum Erzeugen einer mit Saatgut (3) beschichteten Oberfläche mit einem Saatgutverbundstoff (2) gemäß einem der Ansprüche 1 bis 7 mit den Schritten:
- Bereitstellen des flüssigen Leims (4);
- Vermischen des Leims (4) mit dem Saatgut (3) im Gewichtsverhältnis 100:1, bevorzugt 10:1 und besonders bevorzugt 1:1;
- Aufbringen des Saatgutverbundstoffs (2) auf die Oberfläche und Trocknen des Leims (4).

9. Verfahren nach Anspruch 8, **dadurch gekennzeichnet, dass** die Trocknung des Leims (4) bei Umgebungstemperatur erfolgt.

10. Verfahren nach einem der Ansprüche 8 oder 9, **dadurch gekennzeichnet, dass**
der Leim (4) eine Viskosität zwischen 1 000 mPa*s und 20 000 mPa*s und insbesondere eine Viskosität von 100 000 mPa*s bis 15 000 mPa*s bzw. 13 500 mPa*s aufweist.

11. Verfahren nach einem der Ansprüche 8 bis 10, **dadurch gekennzeichnet, dass**
die Trocknungszeit des Leims (4) kleiner 24 Stunden, insbesondere kleiner 12 Stunden ist.

12. Verfahren nach einem der Ansprüche 8 bis 11, **dadurch gekennzeichnet, dass**
der Leim (4) bei einer Temperatur zwischen 15 °C und 60 °C, vorzugsweise zwischen 20 °C und 45 °C und insbesondere zwischen 25 °C und 40 °C getrocknet wird.

13. Verfahren nach einem der Ansprüche 8 bis 12, **dadurch gekennzeichnet, dass**
der Trockengehalt des Saatguts (3) vordem Vermischen mit dem Leim (4) zwischen 5 % und 15 %, vorzugsweise zwischen 6 % und 12 % und insbesondere zwischen 7 % und 10 % liegt.

14. Verfahren nach einem der Ansprüche 8 bis 13, **dadurch gekennzeichnet, dass**
der Saatgutverbundstoff (2) in einer vorgegeben Form auf die Oberfläche aufgetragen wird.

15. Verwendung des Saatgutverbundstoff (2) gemäß einem der Ansprüche 1 bis 7 für die Beschichtung einer Oberfläche oder zur Herstellung eines Pflanzkörpers (1), wie aus Kokosfasern oder ähnliche Fasern, Erde, Torf, insbesondere in gepresster Form, Holz, Papier oder Pappe, Kork und/oder Kunststoff oder einer Mischung aus wenigstens zwei der vorgenannten.
